# EUROPEAN PATENT APPLICATION

(11) **EP 4 431 212 A1**
(43) Date of publication of application: **18.09.2024**
(21) Application number: 21964039.8
(22) Date of filing: 11.11.2021
(51) Int. Cl.: B23H 7/02, B23H 7/06

(54) **WIRE ELECTRICAL DISCHARGE MACHINE, AND CONTROL METHOD FOR WIRE ELECTRICAL DISCHARGE MACHINE**

(71) Applicant: FANUC CORPORATION, Oshino-mura Minamitsuru-gun Yamanashi 401-0597 (JP)
(72) Inventor: INAYAMA, Suguru, Minamitsuru-gun, Yamanashi 401-0597 (JP); FURUKAWA, Hiroyuki, Minamitsuru-gun, Yamanashi 401-0597 (JP)
(74) Representative: Schmidt, Steffen J.
(86) International application number: PCT/JP2021/041529
(87) International publication number: WO 2023/084684

(57) **Abstract**

A wire electrical discharge machine (10) comprises: a groove width calculation unit (30) which calculates the groove width of a machining groove (46); a display control unit (32) which causes a display unit (38) to display the machining groove (46), having the calculated groove width, along a machining path (44) obtained by adding an offset value to a programed path (42) defined by a machining program; and a contact point detection unit (34) which detects, in the machining groove (46) displayed along the machining path (44), a point at which a contact with the machining groove (46) occurs.

## Description

### TECHNICAL FIELD

The present invention relates to a wire electrical discharge machine and a control method for a wire electrical discharge machine.

### BACKGROUND ART

JP 2015-229207 A discloses a wire electrical discharge machine that displays a machining path on a display unit.

### SUMMARY OF THE INVENTION

It is considerably difficult for a user to determine when a core is going to fall from a workpiece based on the machining path displayed on the display unit as in the wire electrical discharge machine disclosed in JP 2015-229207 A. Therefore, there is a problem that the core falls from the workpiece at a timing that the user does not expect.

The present invention has the object of solving the aforementioned problem.

A first aspect of the present invention is characterized by a wire electrical discharge machine for performing electrical discharge machining on a workpiece by relatively moving a wire electrode relative to the workpiece in accordance with a machining program defining a programmed path, the wire electrical discharge machine including: a groove width calculation unit configured to calculate a groove width of a machined groove; a display control unit configured to cause a display unit to display the machined groove having the groove width, along a machining path determined based on the programmed path and in consideration of an offset value; and a contact location detection unit configured to detect a location where contact between portions of the machined groove occurs in the machined groove displayed along the machining path.

A second aspect of the present invention is characterized by a control method for a wire electrical discharge machine that performs electrical discharge machining on a workpiece by relatively moving a wire electrode relative to the workpiece in accordance with a machining program defining a programmed path, the control method including: a groove width calculation step of calculating a groove width of a machined groove; a display control step of causing a display unit to display the machined groove having the groove width, along a machining path determined based on the programmed path and in consideration of an offset value; and a contact location detection step of detecting a location where contact between portions of the machined groove occurs in the machined groove displayed along the machining path.

According to the present invention, the user can easily determine when the core is going to fall from the workpiece.

### BRIEF DESCRIPTION OF DRAWINGS

FIG. 1 is a schematic diagram showing a wire electrical discharge machine;
FIG. 2 is a view for explaining a groove width of a machined groove;
FIG. 3 is a diagram showing an example of display by a display unit;
FIG. 4 is a diagram showing an example of display by the display unit;
FIG. 5 is a schematic view showing a wire electrode and a workpiece during electrical discharge machining;
FIG. 6 is a schematic view showing a wire electrode and a workpiece during electrical discharge machining;
FIG. 7 is a flowchart showing a flow of machined groove display control;
FIG. 8 is a diagram showing an example of display by the display unit;
FIG. 9 is a diagram showing an example of display by the display unit; and
FIG. 10 is a flowchart showing a flow of machined groove display control.

### DETAILED DESCRIPTION OF THE INVENTION

### [First Embodiment]

### [Configuration of Wire Electrical Discharge Machine]

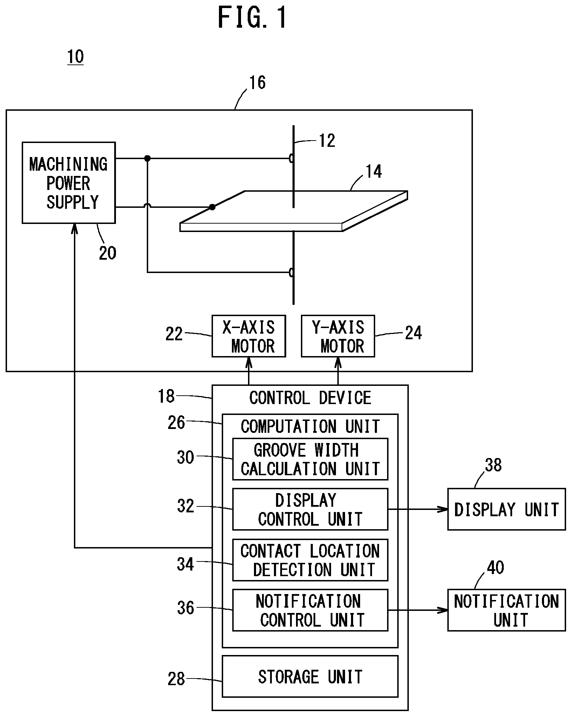

FIG. 1 is a schematic diagram showing a wire electrical discharge machine 10. The wire electrical discharge machine 10 applies a voltage between a wire electrode 12 and a workpiece 14 (hereinafter, may be referred to as an inter-electrode gap) to generate electrical discharge. Thus, the workpiece 14 is subjected to electrical discharge machining. The wire electrical discharge machine 10 includes a machine main body 16 and a control device 18.

The machine main body 16 includes a machining power supply 20, an X-axis motor 22, and a Y-axis motor 24. The machining power supply 20 applies a voltage to the inter-electrode gap. The X-axis motor 22 and the Y-axis motor 24 move a non-illustrated work table. The workpiece 14, which is fixed to the work table, moves together with the work table, to thereby cause relative movement of the wire electrode 12 with respect to the workpiece 14.

The control device 18 includes a computation unit 26 and a storage unit 28. The computation unit 26 includes a processor, for example, such as a CPU (Central Processing Unit), a GPU (Graphics Processing Unit), or the like. The computation unit 26 includes a groove width calculation unit 30, a display control unit 32, a contact location detection unit 34, and a notification control unit 36. The groove width calculation unit 30, the display control unit 32, the contact location detection unit 34, and the notification control unit 36 can be realized by the computation unit 26 executing a program stored in the storage unit 28. At least part of the groove width calculation unit 30, the display control unit 32, the contact location detection unit 34, and the notification control unit 36 may be realized by an integrated circuit such as an ASIC (Application Specific Integrated Circuit) or a FPGA (Field-Programmable Gate Array). The groove width calculation unit 30, the display control unit 32, the contact location detection unit 34, and the notification control unit 36 can be realized by an electronic circuit including a discrete device.

The storage unit 28 is constituted by a non-illustrated volatile memory, and a non-illustrated non-volatile memory. The volatile memory is, for example, a RAM (Random Access Memory), or the like. The non-volatile memory, for example, is a ROM (Read Only Memory), a flash memory, or the like. For example, data and the like are stored in the volatile memory. For example, programs, tables, maps, and the like are stored in the non-volatile memory. At least a portion of the storage unit 28 may be provided in the aforementioned processor, the integrated circuit, or the like. At least a portion of the storage unit 28 may be mounted on a device connected to the wire electrical discharge machine 10 via a network.

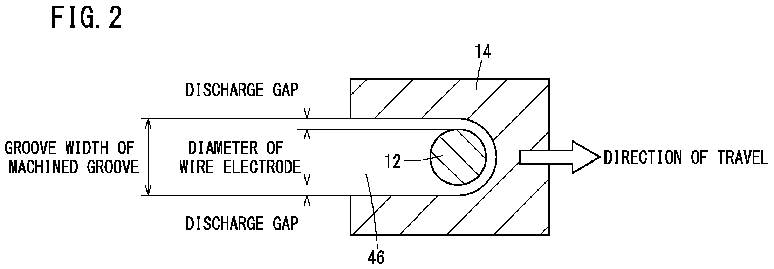

The groove width calculation unit 30 calculates the groove width of a machined groove 46 formed in the workpiece 14 by electrical discharge machining. FIG. 2 is a view for explaining the groove width of the machined groove 46. As shown in FIG. 2, the groove width of the machined groove 46 is determined by the following two factors. The first factor is the diameter of the wire electrode 12. The second factor is the discharge gap in a direction orthogonal to the direction of travel of the wire electrode 12 relative to the workpiece 14.

The groove width calculation unit 30 calculates the groove width of the machined groove 46 based on at least one of the following plurality of pieces of information. The plurality of pieces of information include: information in a database concerning the groove width of the machined groove 46; the diameter of the wire electrode 12; and machining conditions. The machining conditions include, for example, a machining speed, discharge energy supplied to the inter-electrode gap, and the like.

The information in the database concerning the groove width of the machined groove 46 is information stored in the storage unit 28. In the electrical discharge machining performed in advance, the width of the machined groove 46 formed in the workpiece 14 is measured. The measured value is stored in the storage unit 28 in association with conditions such as the diameter of the wire electrode 12, the thickness of the workpiece 14, the material of the workpiece 14, etc. Hereinafter, the conditions such as the diameter of the wire electrode 12, the thickness of the workpiece 14, the material of the workpiece 14, etc. are referred to as setting conditions. The groove width calculation unit 30 acquires information on the groove width of the machined groove 46 corresponding to the setting condition, from the storage unit 28.

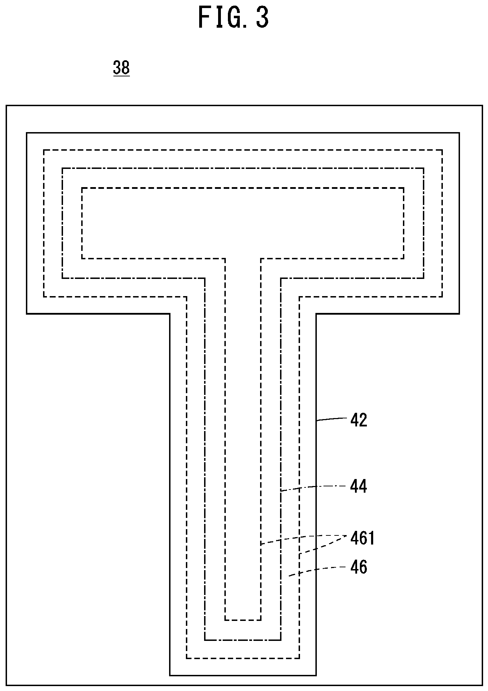

FIG. 3 is a diagram illustrating an example of display by a display unit 38. The display control unit 32 causes the display unit 38 to display a programmed path 42, a machining path 44, and the machined groove 46.

The programmed path 42 is defined by the machining program. The shape of the workpiece 14 after machining is defined by the programmed path 42.

The machining path 44 is a path that the wire electrode 12 takes. The machining path 44 is determined based on the programmed path 42 and in consideration of an offset value of the wire electrode 12. The offset value is determined based on the diameter of the wire electrode 12 and the discharge gap. The direction in which the machining path 44 is positioned away from the programmed path 42 indicates an offset direction defined by the machining program. The distance between the programmed path 42 and the machining path 44 indicates the offset value.

The display control unit 32 causes the display unit 38 to display, along the machining path 44, the machined groove 46 having the width calculated by the groove width calculation unit 30. The distance between two lines indicating the machined groove 46 indicates the groove width calculated by the groove width calculation unit 30. The machining path 44 is positioned at the center, in the width direction, of the machined groove 46.

Although the machined groove 46 is shown by two lines 461 in FIG. 3, the machined groove 46 may be shown by one line. In this case, the groove width calculated by the groove width calculation unit 30 is indicated by the thickness of the line. In FIG. 3, the programmed path 42 is shown by a solid line. The machining path 44 is indicated by a dash-dotted line. The machined groove 46 is indicated by dashed lines. However, all of the programmed path 42, the machining path 44, and the machined groove 46 may be indicated by solid lines. The color of the line indicating each of the programmed path 42, the machining path 44, and the machined groove 46 may be changed.

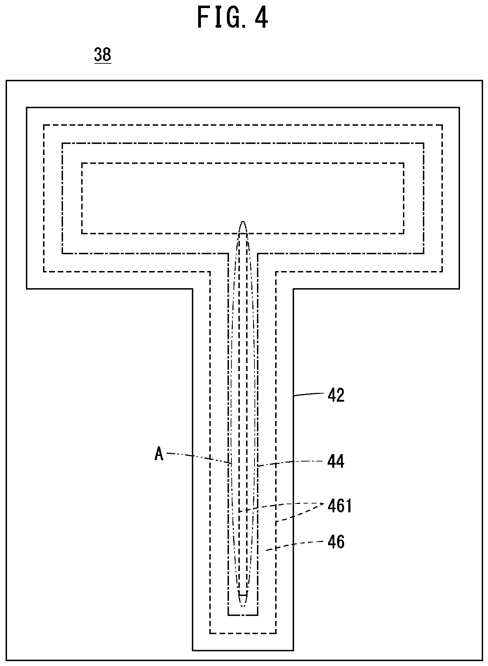

The contact location detection unit 34 detects a location where contact between portions of the machined groove 46 occurs in the machined groove 46 displayed on the display unit 38. FIG. 4 is a diagram illustrating an example of display by the display unit 38. FIG. 4 shows a region indicated by A, the region indicating a location where contact between portions of the machined groove 46 occurs in the machined groove 46 displayed on the display unit 38.

When a location where contact between portions of the machined groove 46 occurs is detected in the machined groove 46 displayed on the display unit 38, the notification control unit 36 causes a notification unit 40 to notify the user of the detection. The notification unit 40 notifies the user that there is a possibility that the core will fall from the workpiece 14, by using sound or the like. The display control unit 32 may cause the display unit 38 to notify the user. The display unit 38 notifies the user that there is a possibility that the core will fall from the workpiece 14, by characters, images, or the like.

### [Fall of Core]

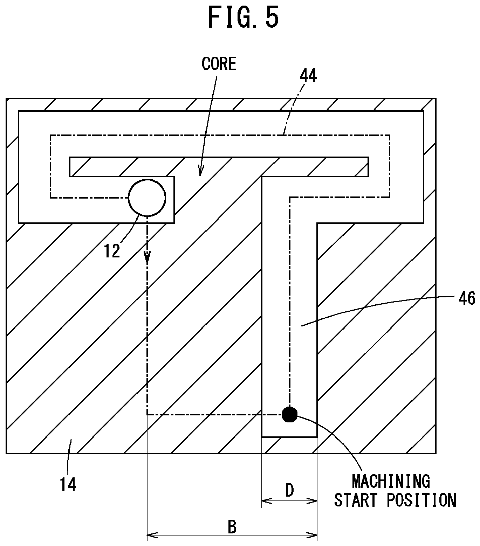

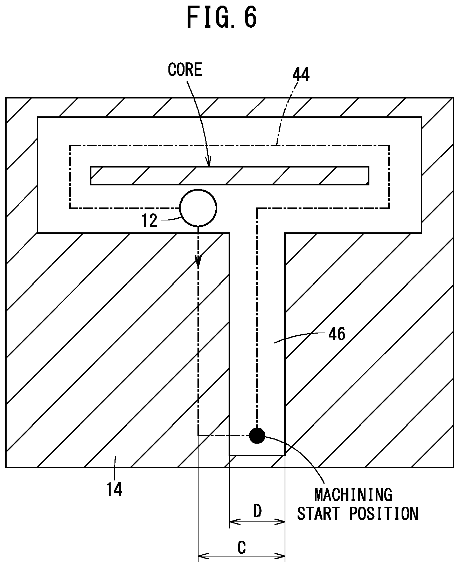

FIGS. 5 and 6 are schematic views showing the wire electrode 12 and the workpiece 14 during electrical discharge machining. In each of FIGS. 5 and 6, a machining start position, a machining path 44, and an arrow are shown. The arrow indicates the direction of travel of the wire electrode 12 relative to the workpiece 14. The width indicated by B in FIG. 5 is larger than the width indicated by C in FIG. 6. The width indicated by B in FIG. 5 is larger than twice the groove width D of the machined groove 46. On the other hand, the width indicated by C in FIG. 6 is not more than twice the groove width D of the machined groove 46.

In a case that the machining path 44 is set as shown in FIG. 5, the core remains connected to the workpiece 14 even if the wire electrode 12 moves to the position shown in FIG. 5. Therefore, the core does not fall from the workpiece 14. On the other hand, in a case that the machining path 44 is set as shown in FIG. 6, the core is separated from the workpiece 14 when the wire electrode 12 has moved to the position shown in FIG. 6. Therefore, the core falls from the workpiece 14.

### [Machined Groove Display Control]

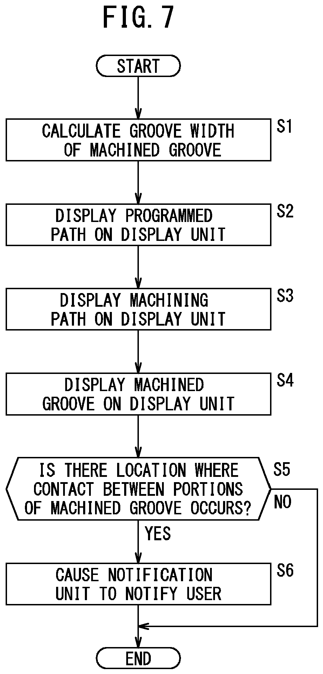

FIG. 7 is a flowchart showing a flow of the machined groove display control. The machined groove display control is executed by the control device 18 before the wire electrical discharge machine 10 starts electrical discharge machining of the workpiece 14.

In step S1, the groove width calculation unit 30 calculates the groove width of the machined groove 46 to be formed in the workpiece 14. Thereafter, the process transitions to step S2.

In step S2, the display control unit 32 causes the display unit 38 to display the programmed path 42. Thereafter, the process transitions to step S3.

In step S3, the display control unit 32 causes the display unit 38 to display the machining path 44 together with the programmed path 42. Thereafter, the process transitions to step S4.

In step S4, the display control unit 32 causes the display unit 38 to display the machined groove 46 together with the programmed path 42 and the machining path 44. Thereafter, the process transitions to step S5.

In step S5, the contact location detection unit 34 determines whether or not there is a location where contact between portions of the machined groove 46 occurs in the machined groove 46 displayed on the display unit 38. If there is a location where contact between portions of the machined groove 46 occurs in the machined groove 46 displayed on the display unit 38, the process proceeds to step S6. If there is no location where contact between portions of the machined groove 46 occurs in the machined groove 46 displayed on the display unit 38, the machined groove display control is put to an end.

In step S6, the notification control unit 36 causes the notification unit 40 to notify the user that there is a possibility that the core will fall from the workpiece 14. Thereafter, the machined groove display control is ended.

### [Operation and Effect]

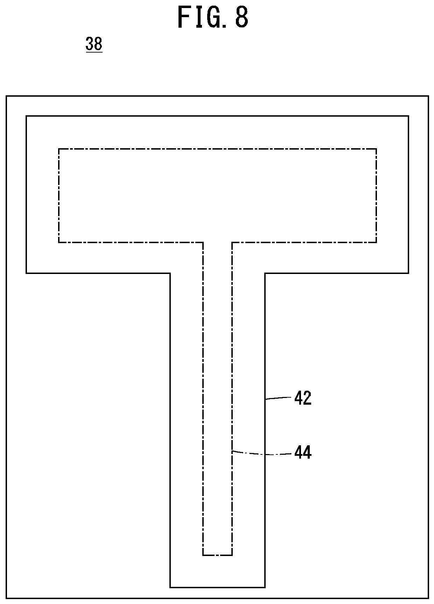

FIG. 8 is a diagram illustrating an example of display by the display unit 38. In the conventional wire electrical discharge machine, before performing electrical discharge machining on the workpiece 14, as shown in FIG. 8, the display unit 38 is caused to display a programmed path 42 and a machining path 44. The user can determine that the core will fall from the workpiece 14 at a timing when the wire electrode 12 has returned to the machining start position, based on the display on the display unit 38 shown in FIG. 8. However, actually, as shown in FIG. 6, the core falls from the workpiece 14 at a timing before the wire electrode 12 returns to the machining start position.

It is difficult for the user to determine when the core is going to fall from the workpiece 14 based on the programmed path 42 and the machining path 44 displayed on the display unit 38. Consequently, the core may fall at a timing that is not expected by the user. When the core falls at a timing not expected by the user, the falling core may damage the machine main body 16.

In order to address the above situation, in the wire electrical discharge machine 10 of the present embodiment, the groove width calculation unit 30 calculates the groove width of the machined groove 46. Thereafter, the display control unit 32 causes the display unit 38 to display, along the machining path 44, the machined groove 46 having the calculated groove width.

When there is a location where contact between portions of the machined groove 46 occurs, there is a possibility that the core may fall from the workpiece 14. The display unit 38 shown in FIG. 4 displays the machined groove 46 in addition to the programmed path 42 and the machining path 44. Therefore, the user can recognize whether or not there is a location where contact between portions of the machined groove 46 occurs, from the display on the display unit 38. Thus, the user can easily determine when the core is going to fall from the workpiece 14 based on the display on the display unit 38.

Further, in the wire electrical discharge machine 10 of the present embodiment, the contact location detection unit 34 detects a location where contact between portions of the machined groove 46 occurs in the machined groove 46 displayed on the display unit 38. When the contact location detection unit 34 detects that there is a location where contact between portions of the machined groove 46 occurs in the machined groove 46 displayed on the display unit 38, the notification control unit 36 causes the notification unit 40 to notify the user of the detection. Thus, the user can recognize that there is a possibility that the core may fall from the workpiece 14 based on the notification by the notification unit 40.

In the wire electrical discharge machine 10 of the present embodiment, the display control unit 32 causes the display unit 38 to display the machined groove 46 together with at least one of the programmed path 42 or the machining path 44. Thus, the user can grasp the shape of the programmed path 42, the shape of the machining path 44, and the shape of the machined groove 46 based on the display on the display unit 38.

In the wire electrical discharge machine 10 of the present embodiment, the groove width calculation unit 30 calculates the groove width of the machined groove 46 based on at least one of the following plurality of pieces of information. The plurality of pieces of information include: information in the database concerning the groove width of the machined groove 46; the diameter of the wire electrode 12; and the machining conditions. Thus, the groove width of the machined groove 46 can be calculated with high accuracy.

The wire electrical discharge machine 10 of the present embodiment includes the storage unit 28. The storage unit 28 stores the measured value of the width of the machined groove 46 formed in the workpiece 14 in the electrical discharge machining performed in advance. The measured value is stored in the storage unit 28 in association with setting conditions such as the diameter of the wire electrode 12, the thickness of the workpiece 14, the material of the workpiece 14, etc. Thus, the groove width calculation unit 30 can acquire the information of the measured value corresponding to the setting condition, from the storage unit 28.

In the wire electrical discharge machine 10 of the present embodiment, the machining path 44 is positioned at the center, in the width direction of the machined groove 46 displayed on the display unit 38, of the machined groove 46. This can improve the accuracy with which the machined groove 46 is displayed on the display unit 38.

### [Second Embodiment]

In the wire electrical discharge machine 10 of the present embodiment, the display control unit 32 causes the display unit 38 to display a machining start hole 48. The machining start hole 48 is a hole for inserting the wire electrode 12 into the workpiece 14 before starting electrical discharge machining.

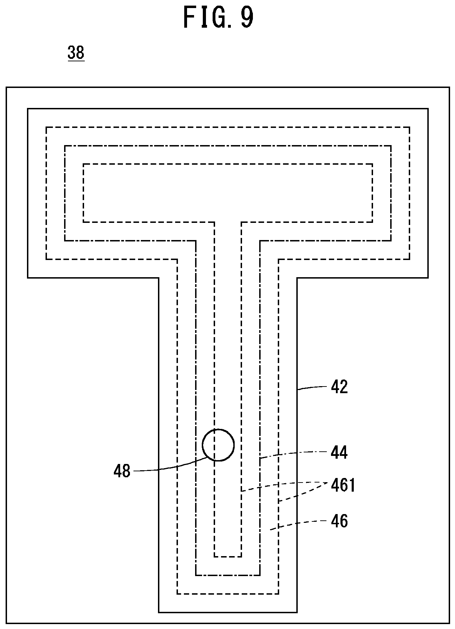

FIG. 9 is a diagram illustrating an example of display by the display unit 38. As shown in FIG. 9, the machining start hole 48 is displayed on the display unit 38 together with the programmed path 42, the machining path 44, and the machined groove 46.

### [Machined Groove Display Control]

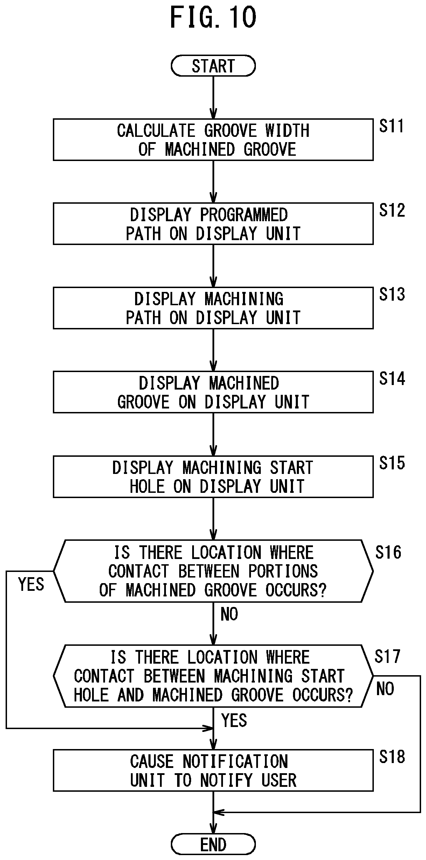

FIG. 10 is a flowchart showing a flow of the machined groove display control. The machined groove display control is executed by the control device 18 before the wire electrical discharge machine 10 starts electrical discharge machining of the workpiece 14.

In step S11, the groove width calculation unit 30 calculates the groove width of the machined groove 46 to be formed in the workpiece 14. Thereafter, the process transitions to step S12.

In step S12, the display control unit 32 causes the display unit 38 to display the programmed path 42. Thereafter, the process transitions to step S13.

In step S13, the display control unit 32 causes the display unit 38 to display the machining path 44 together with the programmed path 42. Thereafter, the process transitions to step S14.

In step S14, the display control unit 32 causes the display unit 38 to display the machined groove 46 together with the programmed path 42 and the machining path 44. Thereafter, the process transitions to step S15.

In step S15, the display control unit 32 causes the display unit 38 to display the machining start hole 48 together with the programmed path 42, the machining path 44, and the machined groove 46. Thereafter, the process transitions to step S16.

In step S16, the contact location detection unit 34 determines whether or not there is a location where contact between portions of the machined groove 46 occurs in the machined groove 46 displayed on the display unit 38. If there is a location where contact between portions of the machined groove 46 occurs in the machined groove 46 displayed on the display unit 38, the process proceeds to step S18. If there is no location where contact between portions of the machined groove 46 occurs in the machined groove 46 displayed on the display unit 38, the process proceeds to step S17.

In step S17, the contact location detection unit 34 determines whether or not there is a location where contact between the machining start hole 48 and the machined groove 46 occurs in the machined groove displayed on the display unit 38. If there is a location where contact between the machining start hole 48 and the machined groove 46 occurs in the machined groove displayed on the display unit 38, the process proceeds to step S18. If there is no location where contact between the machining start hole 48 and the machined groove 46 occurs in the machined groove displayed on the display unit 38, the machined groove display control is ended.

In step S18, the notification control unit 36 causes the notification unit 40 to notify the user that there is a possibility that the core will fall from the workpiece 14. Thereafter, the machined groove display control is ended.

### [Operation and Effect]

In the wire electrical discharge machine 10 of the present embodiment, the display control unit 32 causes the display unit 38 to display the machining start hole 48 together with the machined groove 46.

If there is a location where contact between the machined groove 46 and the machining start hole 48 occurs, there is a possibility that the core may fall. The display unit 38 shown in FIG. 9 displays the machining start hole 48 in addition to the machined groove 46. Therefore, the user can grasp whether or not there is a location where contact between the machined groove 46 and the machining start hole 48 occurs, from the display by the display unit 38. Thus, the user can easily determine when the core is going to fall from the workpiece 14 based on the display on the display unit 38.

Further, in the wire electrical discharge machine 10 of the present embodiment, the contact location detection unit 34 detects a location where contact between the machining start hole 48 and the machined groove 46 occurs in the machined groove displayed on the display unit 38. When the contact location detection unit 34 detects a location where contact between the machining start hole 48 and the machined groove 46 occurs in the machined groove displayed on the display unit 38, the notification control unit 36 causes the notification unit 40 to notify the user. Thus, the user can recognize that there is a possibility that the core may fall from the workpiece 14 based on the notification by the notification unit 40.

It should be noted that the present invention is not limited to the above-described embodiments, and various configurations can be adopted therein without departing from the essence and gist of the present invention.

### [Invention Obtained from Embodiments]

The invention that can be grasped from the above embodiments is described below.

The wire electrical discharge machine (10) for performing electrical discharge machining on the workpiece (14) by relatively moving the wire electrode (12) relative to the workpiece in accordance with the machining program defining the programmed path (42), includes: the groove width calculation unit (30) configured to calculate the groove width of the machined groove (46); the display control unit (32) configured to cause the display unit (38) to display the machined groove having the groove width, along the machining path (44) determined based on the programmed path and in consideration of the offset value; and the contact location detection unit (34) configured to detect a location where contact between portions of the machined groove occurs in the machined groove displayed along the machining path. With this configuration, the user can easily determine when the core is going to fall from the workpiece, based on the display on the display unit.

In the wire electrical discharge machine, the display control unit may cause the display unit to display the machining start hole (48) for inserting the wire electrode into the workpiece, together with the machined groove, and the contact location detection unit may detect a location where contact between the machining start hole and the machined groove occurs in the displayed machined groove. With this configuration, the user can easily determine when the core is going to fall from the workpiece, based on the display on the display unit.

The wire electrical discharge machine may further include the notification control unit (36) configured to cause the notification unit (40) to give notification to a user when the contact location detection unit detects a location where contact between portions of the machined groove occurs in the displayed machined groove or when the contact location detection unit detects a location where contact between the machining start hole and the machined groove occurs in the displayed machined groove. With this configuration, the user can recognize that there is a possibility that the core may fall from the workpiece based on the notification by the notification unit.

In the wire electrical discharge machine, the display control unit may cause the display unit to display the machined groove together with at least one of the programmed path or the machining path. With this configuration, the user can grasp the shape of the programmed path, the shape of the machining path, and the shape of the machined groove, based on the display on the display unit.

In the wire electrical discharge machine, the groove width calculation unit may calculate the groove width based on at least one of a diameter of the wire electrode, a machining condition, or information on the groove width of the machined groove formed in the workpiece in electrical discharge machining performed in advance. With this configuration, the groove width of the machined groove can be calculated with high accuracy.

The wire electrical discharge machine may further include the storage unit (28) configured to store the information on the groove width of the machined groove formed in the workpiece in the electrical discharge machining performed in advance, in association with at least one of the diameter of the wire electrode, the thickness of the workpiece, or the material of the workpiece. With this configuration, the groove width calculation unit can acquire the information of the measured value corresponding to the setting condition, from the storage unit.

In the wire electrical discharge machine, the machining path may be located at the center, in the width direction of the machined groove displayed on the display unit, of the machined groove. This can improve the accuracy with which the machined groove is displayed on the display unit.

The control method for the wire electrical discharge machine that performs electrical discharge machining on the workpiece by relatively moving the wire electrode relative to the workpiece in accordance with the machining program defining the programmed path, includes: a groove width calculation step of calculating the groove width of the machined groove; a display control step of causing the display unit to display the machined groove having the groove width, along the machining path determined based on the programmed path and in consideration of the offset value; and a contact location detection step of detecting a location where contact between portions of the machined groove occurs in the machined groove displayed along the machining path. With this configuration, the user can easily determine when the core is going to fall from the workpiece, based on the display on the display unit.

In the above control method for the wire electrical discharge machine, the display control step may include causing the display unit to display the machining start hole for inserting the wire electrode into the workpiece, together with the machined groove, and the contact location detection step may include detecting a location where contact between the machining start hole and the machined groove occurs in the displayed machined groove. With this configuration, the user can easily determine when the core is going to fall from the workpiece, based on the display on the display unit.

The above control method for the wire electrical discharge machine may further include a notification control step of causing the notification unit to give notification to a user when the contact location detection step detects a location where contact between portions of the machined groove occurs in the displayed machined groove or when the contact location detection step detects a location where contact between the machining start hole and the machined groove occurs in the displayed machined groove. With this configuration, the user can recognize that there is a possibility that the core may fall from the workpiece based on the notification by the notification unit.

In the above method of controlling a wire electrical discharge machine, the display control step may include causing the display unit to display the machined groove together with at least one of the programmed path or the machining path. With this configuration, the user can grasp the shape of the programmed path, the shape of the machining path, and the shape of the machined groove, based on the display on the display unit.

In the above control method for the wire electrical discharge machine, the groove width calculation step may include calculating the groove width based on at least one of the diameter of the wire electrode, the machining condition, or information on the groove width of the machined groove formed in the workpiece in electrical discharge machining performed in advance. With this configuration, the groove width of the machined groove can be calculated with high accuracy.

In the above control method for the wire electrical discharge machine, the information on the groove width of the machined groove formed in the workpiece in the electrical discharge machining performed in advance may be stored in the storage unit in association with at least one of the diameter of the wire electrode, the thickness of the workpiece, or the material of the workpiece. With this configuration, the groove width calculation step can acquire the information of the measured value corresponding to the setting condition, from the storage unit.

In the above control method for the wire electrical discharge machine, the machining path may be located at the center, in the width direction of the machined groove displayed on the display unit, of the machined groove. This can improve the accuracy with which the machined groove is displayed on the display unit.

### Reference Signs List

10: wire electrical discharge machine
12: wire electrode
14: workpiece
30: groove width calculation unit
32: display control unit
34: contact location detection unit
38: display unit
42: programmed path
48: machining start hole

## Claims

1. A wire electrical discharge machine (10) for performing electrical discharge machining on a workpiece (14) by relatively moving a wire electrode (12) relative to the workpiece in accordance with a machining program defining a programmed path (42), the wire electrical discharge machine comprising:
a groove width calculation unit (30) configured to calculate a groove width of a machined groove (46);
a display control unit (32) configured to cause a display unit (38) to display the machined groove having the groove width, along a machining path (44) determined based on the programmed path and in consideration of an offset value; and
a contact location detection unit (34) configured to detect a location where contact between portions of the machined groove occurs in the machined groove displayed along the machining path.

2. The wire electrical discharge machine according to claim 1, wherein
the display control unit causes the display unit to display a machining start hole (48) for inserting the wire electrode into the workpiece, together with the machined groove, and
the contact location detection unit detects a location where contact between the machining start hole and the machined groove occurs in the displayed machined groove.

3. The wire electrical discharge machine according to claim 2, further comprising:
a notification control unit (36) configured to cause a notification unit (40) to give notification to a user when the contact location detection unit detects a location where contact between portions of the machined groove occurs in the displayed machined groove or when the contact location detection unit detects a location where contact between the machining start hole and the machined groove occurs in the displayed machined groove.

4. The wire electrical discharge machine according to any one of claims 1 to 3, wherein
the display control unit causes the display unit to display the machined groove together with at least one of the programmed path or the machining path.

5. The wire electrical discharge machine according to any one of claims 1 to 4, wherein
the groove width calculation unit calculates the groove width based on at least one of a diameter of the wire electrode, a machining condition, or information on the groove width of the machined groove formed in the workpiece in electrical discharge machining performed in advance.

6. The wire electrical discharge machine according to claim 5, further comprising:
a storage unit (28) configured to store the information on the groove width of the machined groove formed in the workpiece in the electrical discharge machining performed in advance, in association with at least one of the diameter of the wire electrode, a thickness of the workpiece, or a material of the workpiece.

7. The wire electrical discharge machine according to any one of claims 1 to 6, wherein
the machining path is located at a center, in a width direction of the machined groove displayed on the display unit, of the machined groove.

8. A control method for a wire electrical discharge machine that performs electrical discharge machining on a workpiece by relatively moving a wire electrode relative to the workpiece in accordance with a machining program defining a programmed path, the control method comprising:
a groove width calculation step of calculating a groove width of a machined groove;
a display control step of causing a display unit to display the machined groove having the groove width, along a machining path determined based on the programmed path and in consideration of an offset value; and
a contact location detection step of detecting a location where contact between portions of the machined groove occurs in the machined groove displayed along the machining path.

9. The control method for the wire electrical discharge machine according to claim 8, wherein
the display control step comprises causing the display unit to display a machining start hole for inserting the wire electrode into the workpiece, together with the machined groove, and
the contact location detection step comprises detecting a location where contact between the machining start hole and the machined groove occurs in the displayed machined groove.

10. The control method for the wire electrical discharge machine according to claim 9, further comprising:
a notification control step of causing a notification unit to give notification to a user when the contact location detection step detects a location where contact between portions of the machined groove occurs in the displayed machined groove or when the contact location detection step detects a location where contact between the machining start hole and the machined groove occurs in the displayed machined groove.

11. The control method for the wire electrical discharge machine according to any one of claims 8 to 10, wherein
the display control step comprises causing the display unit to display the machined groove together with at least one of the programmed path or the machining path.

12. The control method for the wire electrical discharge machine according to any one of claims 8 to 11, wherein
the groove width calculation step comprises calculating the groove width based on at least one of a diameter of the wire electrode, a machining condition, or information on the groove width of the machined groove formed in the workpiece in electrical discharge machining performed in advance.

13. The control method for the wire electrical discharge machine according to claim 12, wherein
the information on the groove width of the machined groove formed in the workpiece in the electrical discharge machining performed in advance is stored in a storage unit in association with at least one of the diameter of the wire electrode, a thickness of the workpiece, or a material of the workpiece.

14. The control method for the wire electrical discharge machine according to any one of claims 8 to 13, wherein
the machining path is located at a center, in a width direction of the machined groove displayed on the display unit, of the machined groove.
